**Europäisches Patentamt**

**European Patent Office**

**Office européen des brevets**

(19)

(11) Publication number: **0 021 489**

**A1**

(12) # EUROPEAN PATENT APPLICATION

(21) Application number: **80200522.3**

(22) Date of filing: **06.06.80**

(51) Int. Cl.³: **G 06 F 3/04**

(30) Priority: **08.06.79 US 46612**

(43) Date of publication of application:
**07.01.81 Bulletin 81/1**

(84) Designated Contracting States:
**DE FR GB**

(71) Applicant: **N.V. Philips' Gloeilampenfabrieken**
**Pieter Zeemanstraat 6**
**NL-5621 CT Eindhoven(NL)**

(72) Inventor: **Andersson, J. A.**
**c/o INT. OCTROOIBUREAU B.V. Prof. Holstlaan 6**
**NL-5656 AA Eindhoven(NL)**

(72) Inventor: **Braun, J. E.**
**c/o INT. OCTROOIBUREAU B.V. Prof. Holstlaan 6**
**NL-5656 AA Eindhoven(NL)**

(72) Inventor: **Fast, J. J.**
**c/o INT. OCTROOIBUREAU B.V. Prof. Holstlaan 6**
**NL-5656 AA Eindhoven(NL)**

(54) Input/output channel for a high-speed computing system.

(57) Both byte-multiplexer and selector channels for transferring data between main memory (40) and peripheral data handling devices (51-53) are disclosed. The interface between the channel (20) and the external control unit (50) is the standard (plug-compatible) IBM/System 370 bus/tag interface. The channel (20) includes a CPU interface unit (110) which receives I/O instructions, channel addresses and device addresses and which returns condition codes and interrupt requests to the CPU (30); a memory interface (120) which fetches the channel address word (CAW), channel command words (CCW's) from memory and returns a channel status word (CSW) to memory at the conclusion of an I O operation; and which (normally) transfers data to and from the memory in four-byte (fullword) units; and an I/O interface unit (130) which transfers device address and status data to and from the connected control unit and which transfers data in one-byte units to and from the control unit. The three interface units communicate with one another over a sixteen-bit (two-byte) internal bus (150) which is also connected to the data ports of a sixteen-bit arithmetic logic unit. (141). The interface units and the ALU are controlled by a micro-sequencing unit (143) which addresses microinstructions stored in a control read-only (142) buffering the data flow between memory (40) and the connected control units (50) and for maintaining updated unit control information for each attached device (51-53).

FIG. 3

Input/output channel for a high-speed computing system.

## BACKGROUND OF THE INVENTION

This invention relates to data processing systems and, more particularly, to input/output channels used to transfer data between a computing system's random access main memory and one or more peripheral data handling units.

A computing system normally comprises a central processing unit which interprets and executes instructions stored in a random access main memory, performs arithmetic and logical operations on data also stored in main memory, and returns the results of such operations to specified locations in the memory. The computing system must also communicate with peripheral data handling units such as card readers and punches, magnetic tape and disc storage units, printers, remote keyboard terminals, and the like. In the simplest computing systems, such input/output (or simply "I/O") data transfers may be handled directly by the central processing unit which itself executed I/O instructions. However, because peripheral data handling devices are typically thousands of times slower than the operating speed of the central processing unit, it is preferable to place the I/O operations under the control of an auxiliary processor called a "direct memory access" (DMA) channel. Such a channel moves information directly to and from memory in blocks while the central processor simultaneously continues to process data in the memory.

In most larger computing systems, the channel operates independently of the central processor by executing one or more instructions called a "channel program" stored in memory. Peripheral devices are normally connected to the channel through a control unit which contains data storage and logic circuits capable of operating several connected peripheral devices. Information is typically transferred between the control unit and the channel over a standard interconnection called the I/O interface.

In larger computer installations the most commonly employed standard I/O interface is that specified for use in the IBM System/370 family of computers. This standard I/O interface, which is common to all channels and all device types, allows one byte (eight data bits plus one parity bit) to pass between the channel and the control unit at one time. In addition, the standard I/O interface includes a plurality of control lines and a pre-determined "hand shaking" protocol under which the channel and the control units communicate with one another.

Although the connection between the channel and the control unit is standardized, the interface between the channel and main storage is not, nor is the hardware architecture employed to instrument the channel's function. For example, the channel may be a completely independent unit or may share hardware resources with the central processor. Further, channels may operate in substantially different ways depending on the types of devices to be attached. For example, multiplexer channels are typically employed to connect a number of low speed devices to the system and operate by interweaving data from the various devices as it passes through the channels. In contrast, selector channels transfer data in large blocks from high speed devices such as magnetic tape or disc storage units.

## SUMMARY OF THE INVENTION

It is a principal object of the present invention to provide efficient, high-speed, low-cost apparatus for transferring information between main memory and peripheral data handling devices in an electronic data processing system.

In accordance with the invention, input/output data transfers are handled by a channel comprising three interface units interconnected by a single, internal, main channel bus, transfers of information between the interface units and the bus being governed by a microprogrammed control unit. The three interface units comprise: (1) a central processor interface for receiving input/output instructions, channel addresses, and device addresses from the central processor and for transmitting condition codes and interrupt requests to the central processor; (2) a memory interface for fetching channel commands from the main memory, for transferring data to and from the main memory in four byte units and, at the conclusion of an I/O operation, for transmitting channel status information to the memory; and, (3) an I/O interface connected to one or more peripheral control units for transmitting commands and device addresses to these peripheral units, for transferring data in one-byte units to and from the peripheral units, and for receiving status information from the peripheral units. The microprogram control unit comprises an arithmetic logic unit, a microprogram sequencing unit, and aread-only memory for storing microcode instructions.

In accordance with a principal feature of the invention, the central processor interface, the memory interface, and the I/O interface communicate with one another over a single 16-bit main information bus which is also connected to the data ports of a 16-bit arithmetic logic unit, information transfers to and from the main information bus being governed by encoded source and destination fields of microinstructions stored in a read-only memory addressed by a microinstruction sequencing unit.

In accordance with a further feature of the invention, the channel includes thermal data storage means for buffering data being transferred such that data is (normally) transferred between the channel and main memory in four-byte units while data transfers over the I/O interface occur in one-byte units.

The principles of the present invention may be employed to construct a byte-multiplexer channel wherein the internal storage means takes the form of a random-access local storage memory for storing unit control information associated with each of a plurality of connected devices, the unit control information including the current main memory address of data to be transferred to or from the associated device, the number of bytes to be transferred, and data being buffered between memory and the associated device.

Alternatively, the principles of the present invention may be applied to construct a selector channel suitable for transferring information in blocks between main memory and high-speed devices such as magnetic tape and disc storage units. In accordance with the invention, the internal storage unit employed in the selector channel includes a first-in, first-out stack memory connected in the data path between memory and the selected high-speed device and a pair of independently operated byte counters monitor the flow of data between memory and the channel and between the peripheral device and the channel.

## BRIEF DESCRIPTION OF THE DRAWINGS

These and other objects, features and advantages of the present invention may be better understood through a consideration of the following detailed description of two specific embodiments of the invention. In the course of this description, reference will frequently be made to the attached drawings in which:

Figure 1 illustrates a standard method by which channel and device addresses are calculated from a CPU I/O instruction and supplied to the channel.

Figure 2 is a simplified main memory map illustrating the standard method of storing and manipulating channel status information, a channel program address, a channel program, and data to be transferred during an I/O operation.

Figure 3 is a block diagram illustrating the basic components of a channel constructed in accordance with the invention and further illustrating the manner in which the channel is interconnected with the CPU, main memory, and a plurality of peripheral devices attached to a connected control unit.

Figures 4, 5 and 6 together from a detailed block diagram of a byte-multiplexer channel which embodies the principles of the invention.

Figures 7, 8 and 9 depict the standard I/O bus/tag interface lines and illustrative standard "handshaking" protocols used to establish and maintain communication between the channel and the attached control unit.

Figures 10, 11 and 12 together form a detailed block diagram of a selector channel constructed in accordance with the principles of the present invention.

DETAILED DESCRIPTION

Table of Contents

                                                              Page

1.      INTRODUCTION                                      7

2.      OVERVIEW                                          7

        2.1     Channels                                  7

        2.2     General I/O Sequence (Prior Art)          7

        2.3     System Hardware Overview                  10

        2.4     Channel Hardware Overview                 10

3.      BYTE MULTIPLEXER CHANNEL I/O                      11

        3.1     Introduction                              11

        3.2     Channel Organization                      11

        3.2.1   CPU Interface                             11

        3.2.2   Memory Interface                          12

        3.2.3   I/O Interface                             13

        3.2.4   Standard I/O Interface                    13

        3.2.5   Microprogrammed Control                   14

        3.2.6   Local Storage                             15

        3.3     Typical Read (Input) Operation            16

        3.3.1   CPU-Channel "Handshaking"                 16
                Sequence

        3.3.2   Initial Device Selection                  18

        3.3.3   Preparation for Data Transfer             20

        3.3.4   Data Transfer                             20

        3.3.5   Data Transfer/Internal Imple-             21
                mentation

        3.3.6   Ending Procedure                          24

        3.4     Writing Operation                         25

        3.5     Multiplexer Channel I/O Modes             25

        3.6     Data and Command Chaining                 26

4.      SELECTOR CHANNEL I/O                              27

        4.1     Selector/Multiplexer Differences          27

        4.2     Memory Interface                          28

        4.3     Data Path Logic                           29

        4.4     I/O Interface                             31

5.      HARDWARE CONSIDERATIONS                           33

6.      CONCLUSION                                        34

## 1. INTRODUCTION

The description which follows explains the logical implementation of both selector and byte multiplexer input/output channels, both of which embody the principles of the present invention.

Following a comprehensive overview of the basic concept of channels and of the hardware, software, and architectural concepts involved, the functional operation of a byte multiplexer channel will be described in detail. A discussion of some of the key differences between the multiplexer and selector channels will then be outlined and the operation of the selector channel will be described.

## 2. OVERVIEW

### 2.1 Channels.

All input/output between the computer (the CPU and main memory) and external devices (such as magnetic tape and disc storage devices, printers, CRT displays, etc.) is done through channels. Two types will be described: byte multiplexer and selector. Unlike some channels, which are partially implemented using resources of the CPU, the channels described here are completely self-contained. Each channel includes its own microprogrammed control logic, and each can operate concurrently with each other and with the CPU.

The selector channel can be connected to a number of control units controlling multiple devices, but only one device can be performing an I/O operation at a time. The selector channel is busy throughout the I/O operation. Devices suitable for servicing by the selector channel are devices which require high speed transfers of blocks of data, such as discs and high-speed tapes.

### 2.2 General I/O Sequence (Prior Art).

As noted earlier, the channels hereinafter described are compatible with and implement the I/O sequences and CPU instructions utilized in the IBM System/370. For those unfamiliar with the I/O system and channel architecture employed in the IBM System/370, an introductory description is contained in Chapter 4, "Channel Organization and Input/Output," Computer Organization and the System/370, by Harry Katzan, Jr., Van Nostrand Reinhold (1971). More definitive information is contained in IBM System/370 publications: "System Summary," Form GA22-7001; "Principles of Operation," Form GA22-7000, IBM Corporation, Poughkeepsie, New York (1970). The following general description of the general I/O sequence is included here to point out those central features of the sequence which should be born in mind while considering the operation of the particular channel architecture contemplated by the present invention.

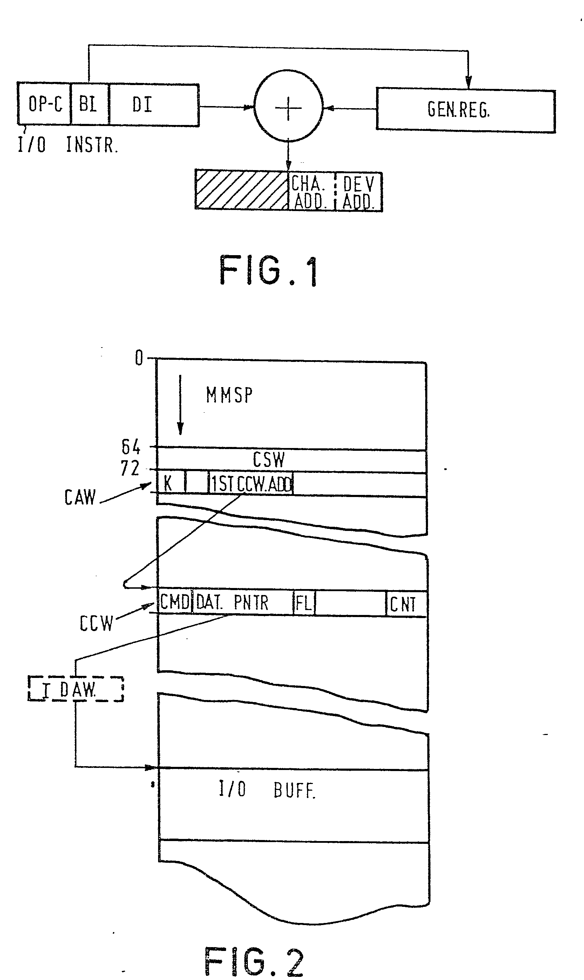

Figure 1 is a schematic representation of how an I/O operation is initiated. The process begins when the CPU executes the 370 instruction START I/O (SIO). The content of the register specified by the B1 field of the SIO instruction is added to the D1 field. The 16 low order bits (16-31) of the result contain the channel address (16-23) and the device address (24-31). This information is sent to all the channels, and the addressed channel responds.

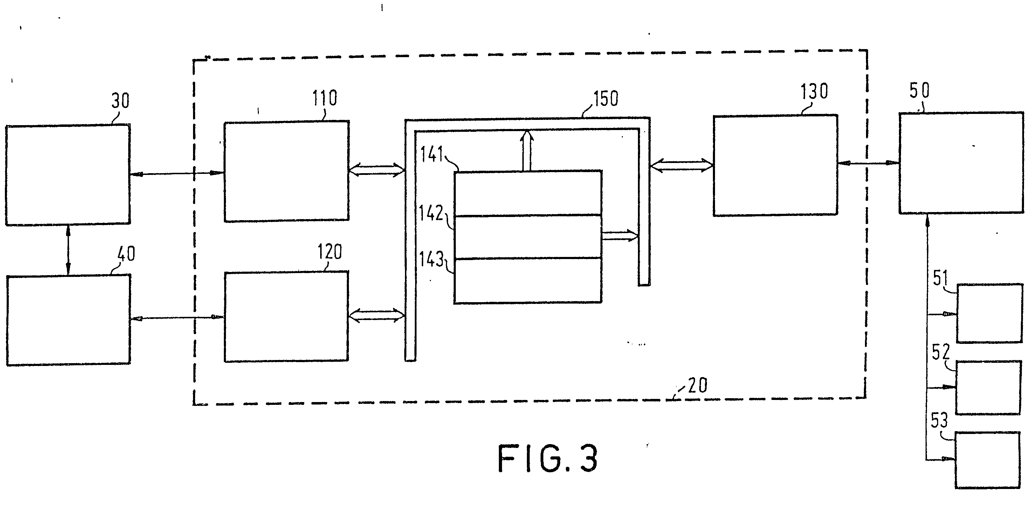

Prior to issuing the SIO, the program executing in the CPU is responsible for inserting a Channel Address Word (CAW) in main memory location 72, as seen in Figure 2. The CAW contains a pointer to the location of the first Channel Control Word (CCW), which must also be placed in memory before issuing the SIO. The CAW also contauns the 4-bit storage protect key which defines the type of accesses permitted to the channel in transferring data to and from the data area. If the SIO executes without exceptions, the addressed channel will respond by first setting the condition codes in the CPU's Program Status Word (PSW) register. A code of zero indicates the channel accepted the SIO. A code of 1 may signify a problem which the software must investigate by looking at the Channel Status Word (CSW), which the channel will place in main memory location 64. Codes of 2 or 3 indicate definite problems. Normally, the channel will respond with a code of zero. The CPU at this point may proceed to the next instruction and continue to process independently of the channel.

The channel then will access the CAW, and using the pointer in the CAW, will fetch the CCW. The CCW contains the definition of the I/O operation to be performed. This includes: (a) the I/O command (e.g. read, write, etc.); (b) a pointer to the main memory area where data is to be placed or read from. This may be a direct pointer, or it may be an indirect one, pointing to a chain of one or more Indirect Data Address Words (IDAW); and, (c) a byte count signifying the number of bytes to be read or written. In addition, various flags in the CCW serve to further modify the I/O operation.

The channel then proceeds to execute the data transfer. Upon the conclusion of the operation, whether successful or not, the channel will store the status word (CSW) in location 64 and cause an interruption which signifies to the CPU the completion of the operation. The CPU software then investigates the CSW to determine whether or not the operation was performed satisfactorily.

More than one CCW may be used in response to a single SIO instruction. This occurs when data chaining or command chaining is in effect, as signified by the appropriate flags in the CCW.

The basic functions performed by channels may be separated as follows:

Accept an I/O instruction from the CPU.

Address an I/O device specified by an I/O instruction.

Fetch CCW's from the channel program in main storage.

Decode CCW's

Test a CCW for validity.

Execute CCW functions.

Place control signals on the I/O interface.

Accept control signals over the I/O interface.

Transfer information between main storage and an I/O device.

Check the parity of bytes transferred.

Count the number of bytes transferred.

Accept and maintain I/O device status information.

Send interruption requests to the CPU.

Sequence and control I/O interruptions from devices.

Update main storage location 64 with status information for accepted interruptions.

Store status information in main storage location 64 when requested by the CPU.

2.3 System Hardware Overview.

Figure 3 illustrates the manner in which a channel 20 transfers data and control signals between the "computer" comprising CPU 30 and the random access main memory 40 and "peripheral devices" comprising, by way of example, an I/O control unit 50 which controls one or more connected I/O devices 51-53.

The CPU 30 and the channel 20 communicate over a channel control bus 60 which originates in the CPU and "daisy-chains" through each channel in the system.

Over this bus, the CPU sends the channel address, device address, and a code defining the I/O instruction to the channels. The I/O channels respond to the CPU I/O request with the condition code. The I/O channels also use this bus to transmit interrupt requests, and the device address associated with the interrupt, to the CPU. The CPU acknowledgement of an I/O interrupt is also sent over channel control bus 60.

2.4 Channel Hardware Overview.

As will be seen, the multiplexer and selector channels are in many respects quite similar to each other. In general, each channel contains the following functional units: a CPU interface 110, a memory interface 120, an I/O interface 130, and a microprogrammed control unit 140. Within the channel 20, data and control signals pass between these functional units primarily by way of a 16-bit wide main internal channel bus 150, called the "C-bus".

The heart of each channel is the microprogrammed control unit 140 which consists of a 16-bit ALU (arithmetic logic unit) 141, a 64-bit wide control ROM (read only memory) 142, and a microsequencer 143. The microsequencer 143 directly addresses the control ROM 142 which contains the microcontrol program for the channel.

Because most elements of the multiplexer and selector channels are so similar (in particular, the CPU interface, the memory interface, and the device (I/O) interface 130), the multiplexer channel, which is the more complex of the two, will be described first. The selector channel will then be discussed more briefly, with emphasis on the differences between its operation and that of the multiplexer channel.

3.    BYTE MULTIPLEXER CHANNEL I/O

3.1    Introduction.

The section of the specification which follows describes the overall function of a byte multiplexer I/O channel and then discusses the step-by-step processing which occurs during a typical read from an I/O device (i.e., an input operation). Following this discussion, the key differences between a read and a write operation are described. Finally the considerations involved in command chaining and other special operations are discussed.

3.2 Channel Organization

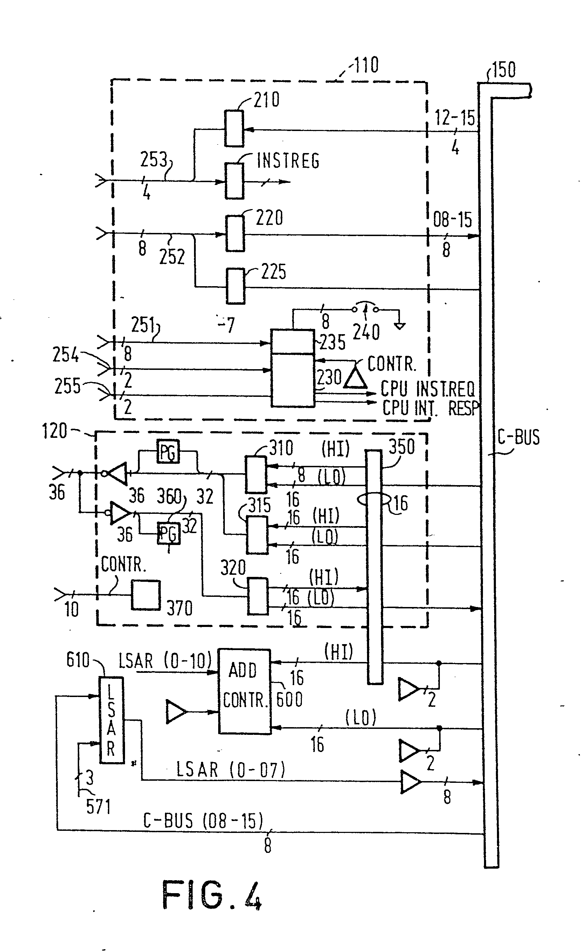

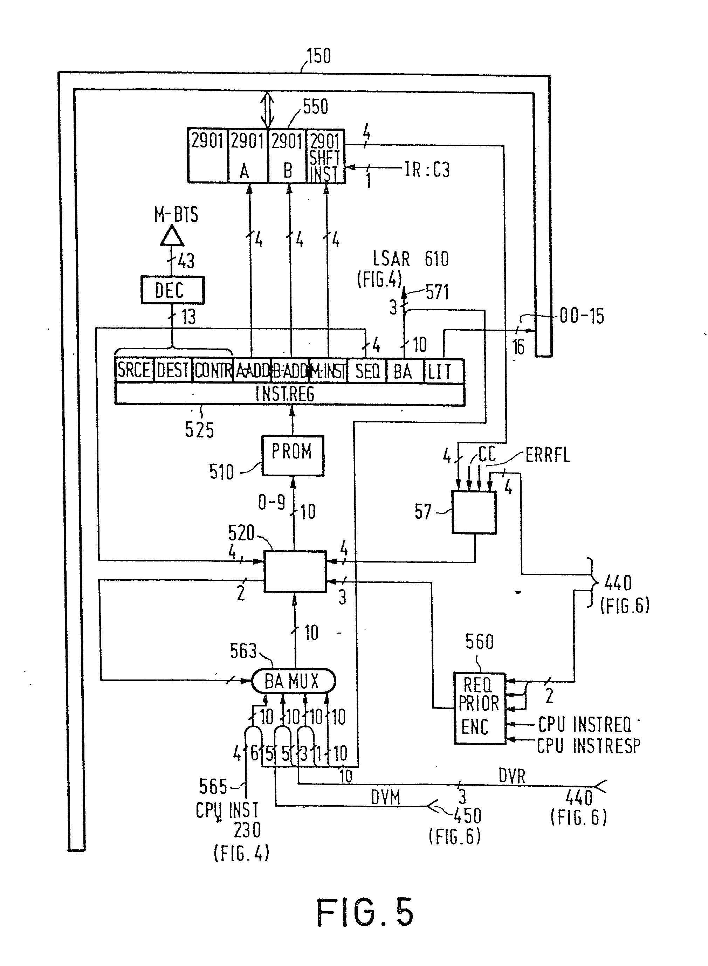

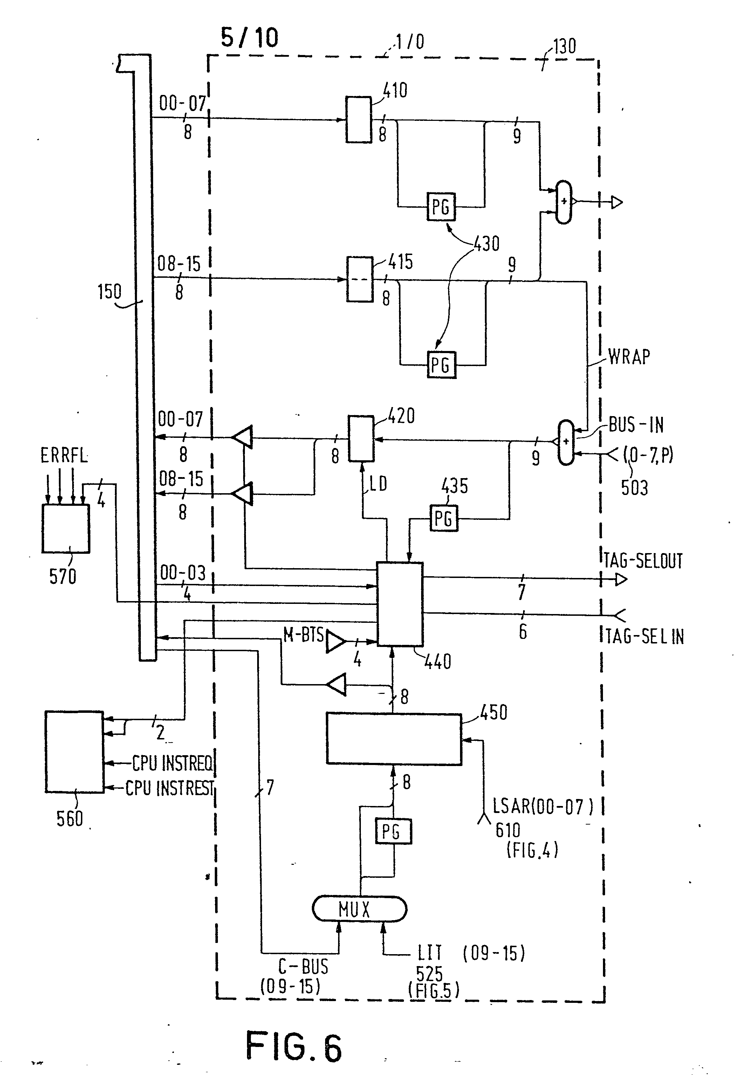

The details of the byte multiplexer channel are shown in Figures 4, 5 and 6 of the drawings. Figure 4 diagrams the CPU interface 110, the memory interface 120, and a local memory unit (to be described later); Figure 5 depicts the microprogram control unit; and Figure 6 illustrates the I/O interface 130.

3.2.1 CPU Interface

The CPU interface consists of two 4-bit registers 210 and 215, two 8-bit registers 220 and 225, and a CPU interface control block 230 which includes a channel address comparator 235. Register 210 is used for storage of channel-generated Condition Codes, while the register 215 is used to store the I/O instruction code sent by the CPU to the channel. Register 220 captures the device address sent by the CPU and register 225 stores the device address for the device causing an interrupt. As discussed later, the control block 230 receives and transmits "handshaking" signals during the initiation of an I/O operation, as well as when the channel issues an interrupt request to the CPU (which generally happens at the conclusion of an I/O operation). The channel address comparator 235 determines whether this channel is the one being addressed by the CPU. It is set up by "jumper" connections (as illustrated at 240) at installation time to give the channel a specific and unique address and is (generally) never modified thereafter.

3.2.2 Memory Interface

The Memory Interface block seen in Figure 4 contains three 32-bit registers 310, 315 and 320, a 16-bit bus 350 called the "H bus", partly generation and checking logic indicated at 360, and a memory interface control block 370. Register 310 is used by the channel to address main memory. Note that, as shown in Figure 4 at 360, before this address is sent to the memory control logic it has a 4-bit parity nibble generated and added to it. Register 315 holds data to be transmitted to main memory while register 320 holds data taken from main memory to the channel. Parity checking takes place simultaneously with the transfer. As will be discussed, control block 230 generates the necessary control and timing signals under microprogram control.

The H bus 350 is used to allow assembly and disassembly of bytes into and from 32-bit words. As seen in Figure 3 the I/O interface 130 can send or accept the high or low order byte on the 16-bit C bus 150. The H bus seen in Figure 4 allows the data (or addresses) in the memory interface registers 310, 315 and 320 to be placed on, or read from the C bus 150 (seen in Figure 3) in 16-bit upper and lower half-words. Thus to load a word into register 315, the I/O interface 130 must place the byte in the high order bits of the C bus 150, and then be moved via the H bus 350 to the high order halfword of the memory input register 315.

3.2.3 I/O Interface

The details of the I/O Interface are shown in Figure 6 of the drawings. The I/O interface 130, together with the channel microgramming, is responsible for creating the correct signals and sequences according to and compatible with the IBM Standard I/O Interface definition. This standard is described in detail in the document "IBM System/360 and System/370 I/O Interface Channel to Control Unit" manual, publication number GA22-6974-4, and a short recap is given in the following section.

The I/O interface 130 has three 8-bit registers seen at 410, 415 and 420 in Figure 6 and used, respectively, to output commands to the device controllers, output data to the devices, and input data from the devices, A parity bit is generated on each byte output, as indicated at 430, and is checked on input as seen at 435. The I/O interface control block 440 which generates a variety of control and sequencing signals, and the device vector memory 450 which is a 256 x 8-bit word RAM, will be discussed in more detail later.

3.2.4 Standard I/O Interface.

The standard IBM interface (also called the standard "I/O" or "Bus/Tag" interface) consists of two cables which provide the means of communication between a channel and its I/O units.

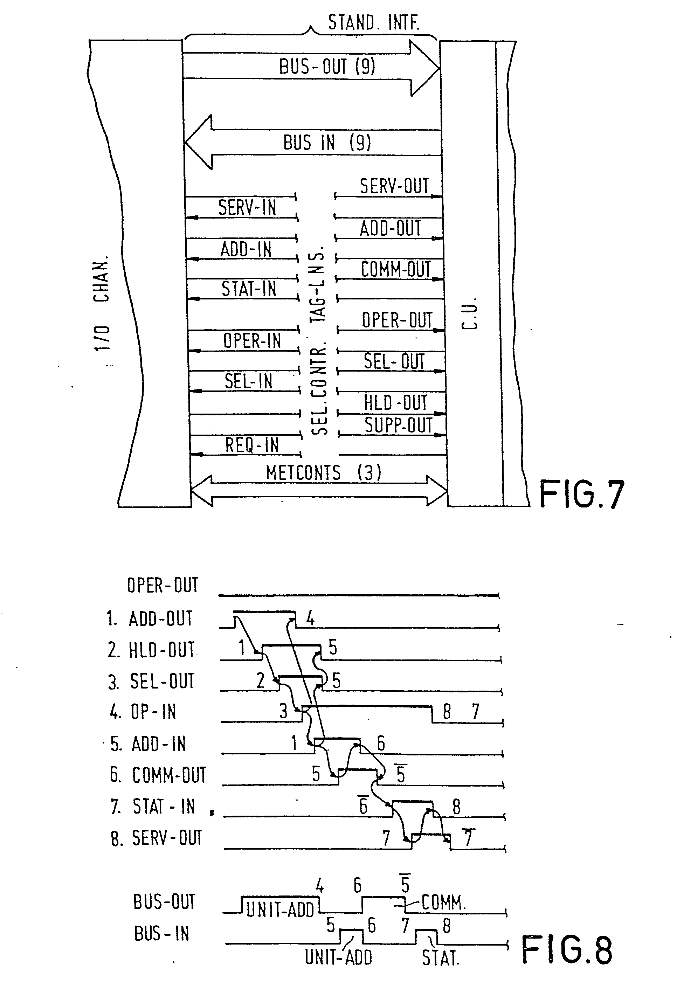

There are a total of 34 lines which make up the I/O interface (see Figure 7). These lines are divided into four general areas:

1. The busses 501 and 503 which are used to transfer bytes of information to and from the channel.

2. The tag lines 505 which are used to tell the receiving unit which type of byte (data, status, command, etc.) is on a bus.

3. The selection controls 507 which are used to interlock the channel and an I/O device for the purpose of transferring information.

4. The metering lines which are used to operate usage meters in the peripheral I/O control units and devices.

The selector channel (to be discussed) implements four additional lines not shown in Figure 7 as follows: DATA IN and DATA OUT tag lines are used to facilitate high speed data transfer and MARK 0 IN and MARK 0 OUT are implemented to permit command retry for those control units which support this feature.

3.2.5 Microprogrammed  Control.

Figure 5 of the drawings shows the microprogramming hardware used to control the channel as it executes those suboperations needed to implement the I/O sequences and CPU instructions previously discussed.

The control program resides in a read-only memory (ROM), seen at 510 in Figure 5, which is capable of storing 1K ($2^{10}$) 64-bit encoded microinstructions. Individual microinstructions in ROM 510 are addressed via the 10-bit address line 515 from a microsequencer 520 (to be discussed later) and are loaded into a microinstruction register 525. As depicted in Figure 5, each instruction is composed of nine principal fields as follows:

1. A SOURCE field (5 bits) which specifies the origon of information applied to C-bus 150 (and/or H-bus 350) during each microcycle;

2. A DESTINATION field (5 bits) which identifies the register or memory location to be loaded from the C-bus (and/or H-bus);

3. A CONTROL field (4 bits) which supplies special control signals (to be discussed) to the I/O interface control 440 (seen in Figure 6) and to the memory interface control 370 (seen in Figure 4);

4 and 5. A-address and B-address fields (4 bits each) employed to address one or two operands held within a 16 x 16 bit local storage unit (not shown) in an arithmetic and logic unit (ALU) indicated generally at 550 in Figure 5;

6. An ALU instruction field (9 bits) for controlling the operation of the ALU 550;

7. A sequencer instruction field (4 bits) for controlling the operation of the micrporogram sequencer 520;

8. A branch address (BA) field (10 bits) for supplying branch microinstruction addresses to the sequencer 520 by way of a branch address selection multiplexer seen at 560 in Figure 5; and

9. A litereal field for supplying 16 bits directly to the C-bus 150 from the ROM 510.

A request priority encoder 560, seen in Figure 5, has a 3 bit output connected to sequencer 520 and is used to direct the channel microprogram to a service routine for the highest priority request for service. The encoder 560 has five inputs representing requests from five sources: an address request, a status request and a service request from the I/O interface control 440 (seen in Figure 6) and a CPU instruction request and CPU interrupt-response from the CPU interface control 230 (seen in Figure 4). The encoder 560 picks the highest priority active input and sends its code to special inputs in the sequencer 520 which can execute multi-way branches on the value of this input. When the channel microprogram is not busy with other tasks, it is running in a loop that checks this input for activity. Similar multi-way branching can occur based on the value of the four bits from the test logic block 570, shown just above the priority encoder 560 in Figure 5, as well as the value stored in the instruction register 215 in the CPU interface 110 (Figure 4). The inputs to the test logic block 570 are: error flags from the I/O interface control 440, condition codes from the ALU 550 and a number of other signals (to be discussed).

3.2.6 Local Storage.

At any one time, the multiplexer channel may be controlling I/O operations on a large number of devices. Typically, the channel performs a series of quick connect-disconnect sequences to various devices (subchannels), staying connected to a device long enough to obtain or deliver a byte of data. A local storage unit 600 (seen in Figure 4), augmented by the much faster device vector memory (DVM) 450 (Figure 6), allows the channel to keep track of the progress of each of the many I/O operations it is supervising.

The local storage unit 600, a 2K word x 32 bit random access memory (RAM), is addressed as follows: The eight high order bits of the 11 bit address come from the internal channel bus (C-bus) 150 and represent the device address. The low order three bits select one of eight unit control words (UCW's) associated with this device in the local storage unit 600, and come from the literal field of the channel microword. The content of the UCW's stored in local storage unit 600 will be discussed later.

3.3 Typical Read (Input) Operation.

A "read" operation may be divided into four phases: CPU/channel "handshake", device selection, data transfer and device disconnection. Though there is some overlap among these groups in timing and sequencing, they may be viewed as separate for the purpose of illustration and are discussed separately in the sections that follow.

3.3.1 CPU-Channel "Handshaking" Sequence.

There are two steps in the initiation of any I/O operation. In the first step, the CPU broadcasts a request for an I/O operation over the channel control bus (CCB) 60 (see Figure 3) to all channels. The particular channel addressed, if existing and operational, responds by returning to the CPU a 4-bit condition code. In the second step, the CPU reads this condition code and acknowledges its receipt to the channel. A more detailed description of this process follows:

I/O initiation begins with the CPU placing four data groups on the CCB:-(a) the 8-bit channel address on lines 251; (b) the 8-bit device address on lines 252; (c) a 4-bit code identifying the I/O instruction on line 253; and (d) a "channel instruction request" signal on lines 254. Items (a) and (b) are computed by the CPU from the I/O instruction base and displacement fields. Item (c) consists of bits 6, 7 and 15 of the CPU instruction register (not shown) which are sufficient to uniquely identify the I/O instruction.

The addressed channel identifies itself as such by comparing the channel address on the CCB with its own address, which is set in a DIP switch or jumpers as indicated at 240 in Figure 4. The addressed channel then responds with a "channel instruction acknowledge" signal on lines 255 of the CCB. The channel captures the device address and the instruction code in register 220 and 215 respectively in the CPU interface section 110.

The channel microprogram control is alerted by placing the "PU instruction requested" signal generated by the CPU interface control unit 230 into the priority encoder 560 input to the channel microsequencer. The channel microprogram is able to execute a multi-way branch depending on the value in the instruction register 215 in the CPU interface section which is routed to the sequencer 520 via lines 565 and the address selection MUX 560. In this way the channel microprogram is directed to a routine appropriate to the specific I/O instruction.

The channel microprogram then checks whether or not the conditions for executing the I/O instruction requested exist. This involves, in most cases, an attempt to select the addressed device, connect to it and obtain its status. How this is done will be described shortly. However, in the case of the selector channel, when the channel is already busy with a transfer, the channel can proceed immediately to the next step of the handshaking sequence.

In this second step, the channel computes the condition code and places it in the CC register 210 in its CPU interface section. The signal that loads the CC register also generates the signal "channel condition code present" which is transmitted to the CPU over lines 255 of the CCB.

The CPU is then expected to respond by generating the signal "channel condition code acknowledge", which is transmitted to the channel over lines 254 of the CCB. At the channel CPU interface, this signal deactivates a flip flop (not shown) in the control unit 230 which was activated when the condition code was transmitted to the CPU. This completes the handshaking procedure. At this point, the execution of the I/O instruction from the point of view of the CPU is complete, and it can proceed to the next instruction. Note that "completion of the I/O instruction" is not the same as "completion of the I/O operation," which generally will occur much later.

### 3.3.2 Initial Device Selection.

Initial device selection occurs between the first and second CPU channel " handshakes."

First, the channel puts the device address in register 220 (Figure 4) on the BUS OUT lines 501 (Figure 6) by loading it into the data output register 415. At the same time, the channel raises the ADDRESS OUT line, followed by the SELECT OUT and HOLD OUT signals (see Figure 7).

The SELECT OUT is daisy-chained to however many control units are connected to the channel. This signal is connected through comparison logic in each CU such that the CU that recognizes the device address will break the daisy chain and will not pass the SELECT OUT signal to the next CU. If no CU recognizes the address, the last CU connected will raise the SELECT IN, thus notifying the channel of the unsuccessful selection.

The HOLD OUT is a secondary signal. It is routed to all control units in parallel, and selection is inhibited if HOLD OUT is low. This gives the channel a fast method of cancelling a selection process by simply dropping HOLD OUT.

The selected control unit responds in one of two ways. If it is busy, it will raise the STATUS IN line; otherwise, it will raise the OPERATIONAL IN line (see Figure 7).

In all three cases (unsuccessful selection, control unit, or control unit operational), the channel drops the ADDRESS OUT signal. On either unsuccessfull select or upon receiving STATUS IN, the channel terminates the selection and reports the problem to the CPU by setting the channel status word (CSW) at location 64 in main memory and raising the interrupt request.

Next, the addressed selected control unit raises the ADDRESS IN signal and places the device address on the BUS IN lines seen at 503 in Figure 6. This is a "safety margin" step, which permits the channel to verify that the selected control unit is indeed the one that was initially addressed.

When the channel is satisfied that the device is properly selected, it places the I/O command on the BUS OUT lines 501 by loading it into the COMMAND OUT register 410 and, at the same time, it raises the COMMAND OUT signal.

The selected control unit then drops ADDRESS IN. On recognizing this, the channel responds by dropping COMMAND OUT. The control unit responds by placing a status byte on the BUS IN lines 503, and raises STATUS IN. A status of zero signifies that the device is on-line and not busy. The channel reads the status byte into the data in register 420, and acknowledges it to the control unit by raising SERVICE OUT. The control unit responds by dropping STATUS IN, and the channel follows by dropping SERVICE OUT. This completes the initial selection process.

Figure 8 of the drawings graphically summarizes the standard handshaking procedure which takes place between the channel and the selected control unit. It should be emphasized that the procedure itself is a standard one, as are the interface line formats shown in Figure 7, and neither forms a part of the present invention, which instead resides in the manner in which this and other standard procedures are implemented.

3.3.3 <u>Preparation for Data Transfer</u>.

Once the channel has presented to the CPU the condition code, received acknowledgement from the CPU, and successfully selected an operational peripheral device, it prepares for data transfer. This activity consists of the following steps (see Figure 2):

1. The channel fetches, from memory location 72, the channel address word (CAW).

2. From the CAW, the channel determines the address of its first channel control word (CCW).

3. The channel fetches, from the memory location pointed to by the CAW, the first CCW. The CCW contains an 8-bit command code, a main memory starting address for the data transfer, and a byte count, along with flags which serve to further specify the operation. If the "indirect" flag is on, the channel obtains the first IDAW, from which it gets the memory address for the I/O data. The data chain or command chain flags in the CCW also modify the channel action at this point and later.

4. Channel microcode places selected portions of the CCW in the unit control word (UCW) for the addressed device.

The channel is now ready to supervise the transfer of data between the addressed device and memory.

3.3.4 <u>Data Transfer</u>.

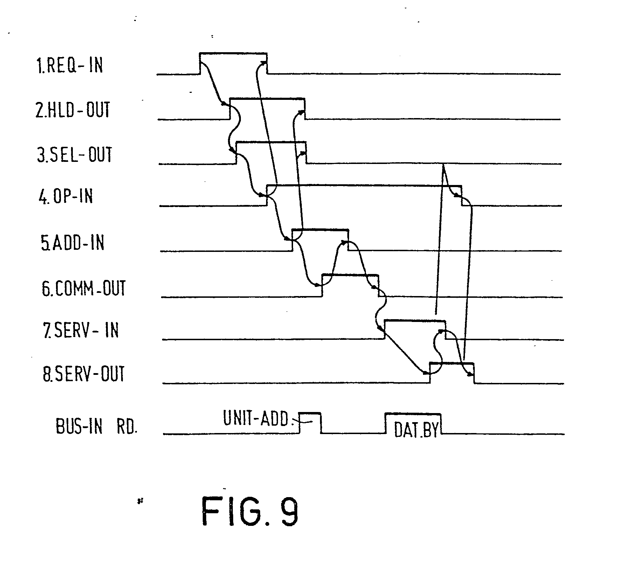

We will first describe the sequence of events which takes place on the Bus/Tag interface (see Figures 7 and 9), and, then proceed to consider how the channel handles each step internally.

When a selected device is ready to transmit data to the channel, its control unit raises the REQUEST IN line.

The channel responds by raising SELECT OUT and HOLD OUT. The control unit then responds by dropping REQUEST IN; raises OPERATIONAL IN and ADDRESS IN; and places the device address on the BUS IN lines 515.

The channel reads the device address and drops SELECT OUT and HOLD OUT. After determining what needs to be done to the data about to be transmitted by the device (this process will be described shortly), the channel raises COMMAND OUT, to signify to the device to proceed with the operation. The control unit drops the ADDRESS IN, places the data byte on the BUS IN lines, and raises the SERVICE IN signal. The channel reads the data byte and acknowledges it with a SERVICE OUT signal. Upon recognizing this signal, the control unit drops SERVICE IN and OPERATIONAL IN. The channel responds by dropping SERVICE OUT. This completes the reading in of one byte into the channel. (Figure 9 is a summary of this process.)

3.3.5 Data Transfer/Internal Implementation.

The data transfer function, as seen by the CPU and the external control units, and as generally described in Sections 3.3.3 and 3.3.4 above, are also standard interface procedures which are not a part of the present invention. However, with the foregoing description of these standard procedures as background, attention can now be turned to specific means internal to the channel for implementing these procedures in accordance with the invention.

The channel recognizes the ADDRESS IN as notification from a peripheral device that it has a byte of data ready for transfer. But it does not yet know any of the transfer details--i.e., how many bytes have already been transferred, whether main memory should be addressed and if so at what location and other essential information. All of this data is contained in the UCW which has been stored in the local storage unit 600. (Recall that this initial UCW storage takes place when the channel prepares to transfer data as discussed in section 3.3.3, supra.)

Channel control logic therefore must fetch this UCW from the local storage unit 600 by means of an 11-bit address routed through a LS address register seen at 610 in Figure 4. The eight most significant bits of this address are the device address just supplied by the control unit and routed under microcode control from the data in register 420 to the LS address register 610 via C-bus 150. The remaining three bits, which select one of the eight words which make up a UCW, are supplied by the literal field from instruction register 525 via lines 571.

The eight UCW's in local store 600 contain, for each device (or "subchannel"), a memory address, a byte count and a four-byte buffer where the data is actually stored awaiting transfer to main memory. The channel microprogram reads the UCW to determine what is to be done with a byte of data which is awaiting handling.

When the control unit sends the SERVICE IN signal to the channel, the I/O interface control unit 440 (Figure 6) sends a signal called SRVREQ (service request) to the request priority encoder 560 for handling. The channel then reads the byte into the data in register 420 and acknowledges with the SERVICE OUT signal, as previously described.

Now the channel must determine what to do with this byte of data in its data input register 420. A number of situations are possible: In order to understand these, it will be helpful to first briefly describe the strategy of memory access employed by the channel.

In general, the channel attempts to buffer four bytes from the device, and writes data to memory a full word (four bytes) at a time. If the memory starting address specified in the CCW (or IDAW) is on a word boundary, the channel merely keeps track of the number of bytes accumulated, and the position of the next available byte, in local storage; when a full word is accumulated, the channel initiates a memory write request.

If, however, the starting address specified in thw CCW (or IDAW) is not on a word boundary, the channel needs to process as many as three bytes which require special handling. Similarly, if the byte count specified in the CCW is not a multiple of four, there may be as many as three bytes at the end of the input data block which require a similar special handling.

To assist in both "normal" and special handling, the channel maintains special information in the device vector memory (DVM) 450 (Figure 6). First, a two-bit pointer to the next available byte position in the UCW data buffer area (in local store 600) is kept in DVM bits 6 and 7. DVM bit 5 is a warning flag: when HIGH, it signifies that the remaining byte count in the present I/O transfer is five or greater; when LOW, it means that only four or less bytes remain to be handled.

In "normal" handling, the channel will store the byte it reads from the data input register 420 into the 4-byte data buffer in the UCW in local storage 600, and increment the byte position index in the DVM 450. A transition from byte position 3 to byte position 0 indicates the need to make a memory request. The channel then reads the memory address from the UCW in local storage unit 600, places it in the memory address register 310, and writes it back to the UCW after incrementing it by 4. The UCW data buffer in the local store 600 is then read into the memory input register 315. (Note, incidentally, that the terminilogy "input" and "output" when applied to the channel's memory interface means "into memory" and "out of memory," whereas "input" and "output" in the bus/tag interface means "into channel" and "out of channel.") The channel then issues a memory write request and places the memory address and the data on the memory bus 65 (see Figure 3) in the correct sequence of cycles.

When the channel determines that "special" handling is required, due to off-boundary starting address, or to the end of the data block which is not a multiple of 4, it switches to "byte mode." In this mode, the channel writes the byte to the high order byte position (byte 0 or bit positions 0-7) of the memory input register 315; and issues a "write byte" request to the memory 40 over memory bus 65. The channel also restores to the UCW the memory address, incremented by 1.

Special handling continues in effect either until a word boundary is reached, and the remaining byte count is at least 4, or until the byte count decrements to zero, whichever comes first.

When the byte count reaches zero, indicating the successful conclusion of the data transfer, the channel proceeds to perform the ending procedure, as described below.

3.3.6 Ending Procedure.

The ending procedure varies, depending on the device characteristics and on whether the channel or the device detects the ending conditions first. (For full details, see the IBM I/O interface specification publication, #GA22-6974, cited earlier in Section 3.2.3.) Here we will describe a typical sequence, which occurs when the device recognizes end conditions prior to the channel.

After the REQUEST IN - SELECT/HOLD OUT - OPERATIONAL IN - ADDRESS IN-COMMAND OUT sequence, the control unit 50 raises STATUS IN instead of the usual SERVICE IN. At the same time, the control unit places a status byte, indicating channel end and device end conditions, on the BUS IN lines. The channel reads the status into the data input register 420 and acknowledges with SERVICE OUT.

If the channel recognizes the end condition before the device, it signals this to the control unit by responding to the unit's SERVICE IN request with a COMMAND OUT signal, instead of the usual SERVICE OUT. The control unit recognizes the receipt of COMMAND OUT in response to a SERVICE IN as the signal to end the operation. The control unit then, proceeds to perform the necessary wind-down operations, after which it will come back with REQUEST IN - STATUS IN sequence as described above.

With the operation complete, the channel constructs the appropriate channel status word (CSW). It stores the CSW in main memory location 64; places the device address in the interrupt queue register 225 in the CPU interface section 110, and presents an I/O interrupt

request to the CPU.

When the CPU is ready to process this particular interrupt, the address of the device causing it is available to the CPU from register 225 via the CCB lines 252.

3.4 Write Operation.

There are no conceptual differences between the input (read) operation described above and between an output operation, except for the direction of data flow.

The channel reads a word of data from the main memory area pointed to by the CCW (or IDAW) and places it in the data buffer in the appropriate UCW area of local store 600. It then proceeds to feed this word, a byte at a time, to the device on the BUS OUT lines 503. The device still controls the rate of transfer by raising REQUEST IN whenever the device is ready to receive the next byte of data. The SERVICE OUT signal now means that the channel has placed the data byte on the BUS OUT lines.

The channel keeps track of the type of operation in progress on this device (write, read, read backwards) in bits 3 and 4 of the DVM location for that device as well as in the UCW stored in local store 600.

3.5 Multiplexer Channel I/O Modes.

The multiplexer channel can operate in either byte interleave or burst mode, The description so far dealt with the byte interleave mode, where every byte read or written required the complete REQUEST IN - SELECT OUT etc. sequence. This is quite adequate to service devices such as communication lines, where speeds of, say, 9,600 bits per second mean that the line is processing 1,200 bytes per second, or almost a full millisecond for each byte-- while channel operations require just a few microseconds per byte. When higher speed devices are connected to the channel, the device or control unit can speed up the data transfer by forcing burst mode on the channel. The control unit does this by keeping OPERATIONAL IN high for as long as it wishes to transfer data. Each byte is then transferred with a quick SERVICE IN - SERVICE OUT sequence.

The channel can break the forced burst mode with and "interface disconnect" sequence. Essentially, the channel places the address of the device on the BUS OUT and raises ADDRESS OUT and SELECT/HOLD OUT simultaneously. This is recognized by the control unit as a signal to drop OPERATIONAL IN and cease the data transfer.

3.6 Data and Command Chaining.

Flag bits in the CCW inform the channel of the type of chaining, if any, that is desired during a given I/O operation. The channel saves this information in the UCW in local storage unit 600.

Chaining means that more than one CCW is involved in the current I/O operation. All CCW's of a chain must be in contiguous doubleword locations, although two or more chains in separate sections of memory can be threaded together via transfer in channel (TIC) commands.

Data chaining allows transferring data to or from non-contiguous blocks of logical address space, as well as the transfer of blocks larger than 64KB. Each CCW in the chain defines a new data area and a new byte count, but the command field is ignored; that is, the operation established by the initial CCW (read, write, etc.) continuous in effect until the end of the chain (data chain flag off).

Data chaining is handled entirely by the channel and has no effect on the bus/tag interface, control unit or device. The channel merely reads the next CCW (if the data chain flag is on) and continues the current operation with the new memory address and byte count.

Command chaining, indicated by the presence of the command chain flag in the CCW, means that the next CCW specifies a possibly-different operation to the device specified by the original CCW. The new operation is to be instituted as soon as the device is finished with the current operation. Unless the device detects malfunctions, the I/O completion interrupt is not generated until the end of execution of the operation specified by the last CCW in the command chain, (<u>i.e.</u> a CCW whose command chain flag is off).

The channel tells the control unit that command chaining is to occur by raising the SUPPRESS OUT together with the SERVICE OUT in response to the control unit's STATUS IN at the end of the previous operation. This warns the control unit that a new initial selection sequence will be initiated immediately following the completion of the device operation. (The exact sequence depends on the control unit and device type-see IBM I/O Interface Specifications publication, GA22-6974.)

4.    SELECTOR CHANNEL I/O

4.1    <u>Selector/Multiplexer Differences</u>.

Although the selector channel can service up to 256 individual devices, attached to several controllers, it is designed to operate with one device at a time. Because of this, the selector channel is capable of maintaining much higher transfer rates, and is somewhat simpler than the multiplexer channel.

Unlike the multiplexer channel, which can operate in either byte interleave or burst modes, the selector channel operates only in burst mode.

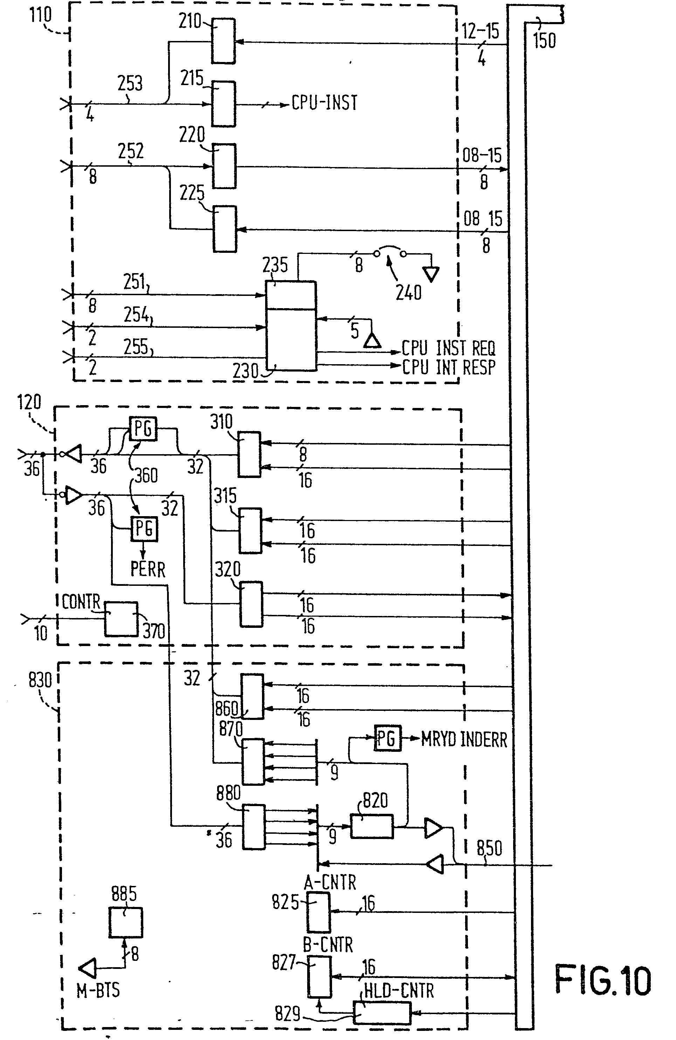

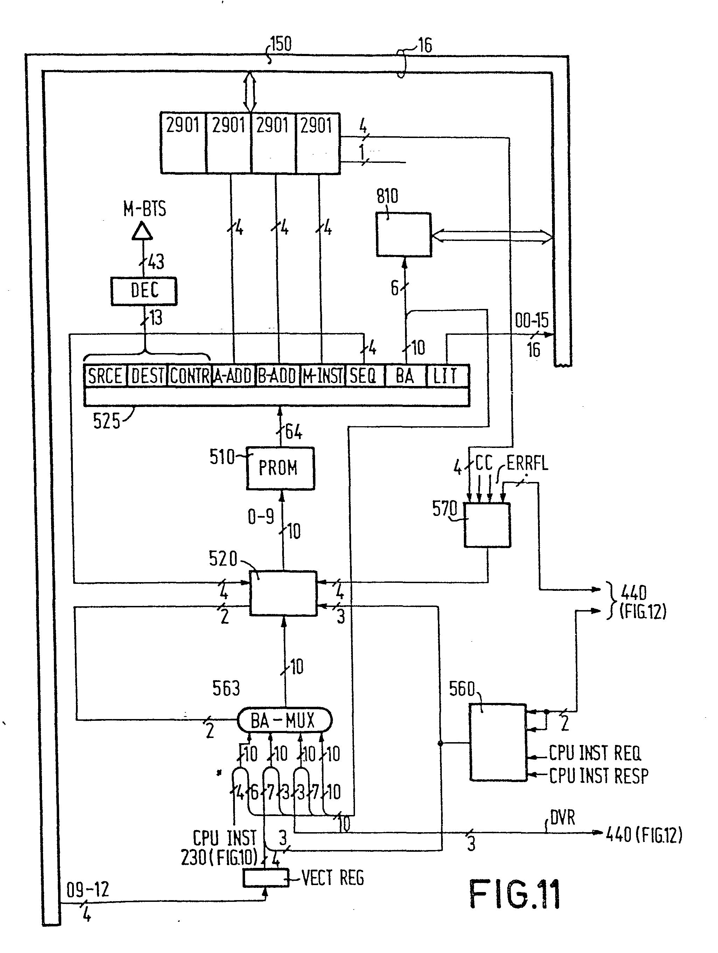

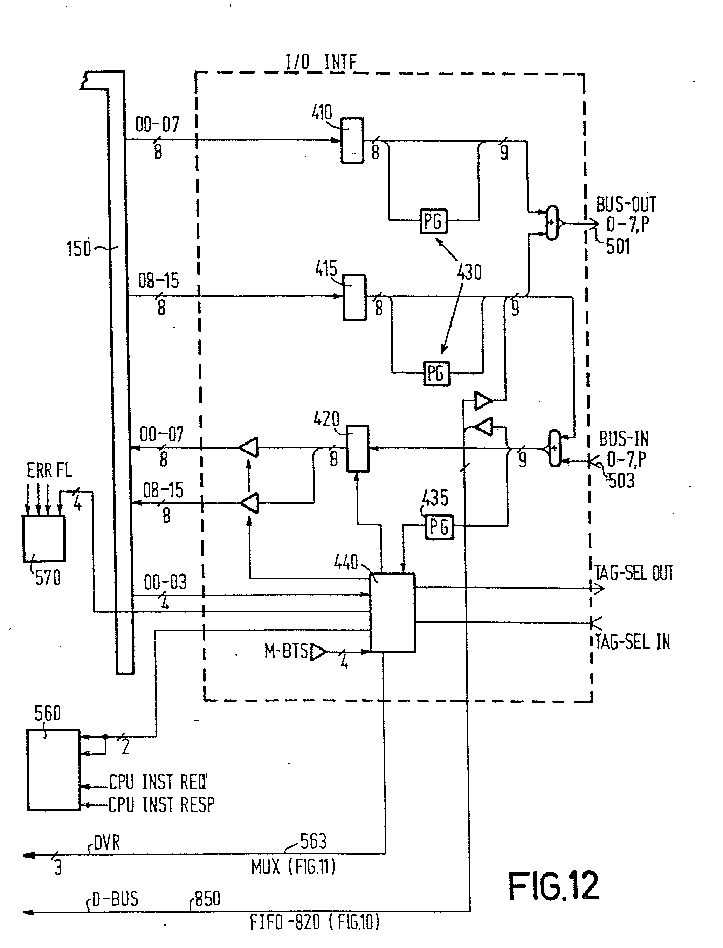

The organization of the selector channel shown in Figures 10, 11 and 12 of the drawings, is very similar to that of the multiplexer channel shown in Figures 4, 5 and 6. The CPU interface units, seen at 110 in Figures 4 and 10, are essentially identical in both channel types. Like the multiplexer channel, the selector channel is controlled by a microsequencer 520 driving a 1K word x 64-bit control ROM 510, and also employs the same 16-bit ALU 550.

The main differences between the two channel types, other than differences in the microprograms used, are:

(1) There is no "Local Storage" in the selector channel. Instead the UCW and other information is kept in a 64-word x 16-bit high-speed RAM, called the "scratch pad," seen at 810 in Figure 11.

(2) There is a 64-byte FIFO (First In, First Out) data buffer 820 along with two byte counters 825 and 827 in a data path logic unit 830 seen in Figure 10. The function of logic unit 830 is to relieve the selector channel's microprogram control unit from the need to supervise the transmission of each byte of data through the channel. Note that there is a direct path (the D-bus 850) between the data output bus 501 and the data input bus 503 of the I/O interface unit 130 (see Figure 12) and the FIFO data buffer 820.

(3) There are two memory address registers: register 310 in memory interface unit 120 and a memory address counter 860 in data path logic unit 830 (Figure 10). Similarly, there are two memory input registers 315 and 870 and output registers 320 and 880, permitting two "simultaneous" memory requests.

(4) There is no H-bus.

(5) There is no device vector memory.

(6) There is no SERVICE REQUEST input to the priority encoder.

(7) Four additional lines in the extended 370 standard I/O bus/tag interface (Figure 7) are supported.

These differences will be discussed in more detail in the following sections.

4.2  Memory Interface.

The memory interface unit 120 (seen at the center portion of Figure 10) is one of two logic blocks capable of communicating with main memory, the other being the data path logic unit 830 to be discussed.

The memory interface unit 120 receives and sends information over the C-bus and, from the hardware standpoint, is essentially identical to that shown in Figure 4. However, in the case of the selector channel, the memory input register 315 is used to store a channel status word (CSW) prior to being sent to memory; and the memory input register 320 acts as a buffer for CSW's and CCW's read from memory.

The high order eight bits of the memory address register 310 are used to hold the storage protect key for channel accesses to memory.

Byte parity is generated on all items (address and data) sent to memory, and is checked on all data received from memory as indicated at 360 in Figure 10.

Duplication in memory communications facilities in the selector channel is necessary, however, because data transfer, which is under largely independent control of the data patch logic (see next section), can be overlapped with memory accesses for the CSW, and in particular, the CCW in data chaining situations.

4.3 Data Path Logic.

The data path logic unit 830, shown at the bottom of Figure 10, is independently capable of communicating with main memory.

The function of this logic is to relieve the microprogram control section seen in Figure 11 from the need to supervise the transfer of each byte of data. The data path logic unit 830 has a direct bus, called the "D-bus 850" to the bus/tag (I/O) interface shown in Figure 7. Data flows to and from the bus/tag interface over the D-bus under control of data path logic unit 830.

The main elements of the data path logic unit 830 are:

(1) A 24-bit memory address counter 860.

(2) Two 32-bit data registers for input to memory (register 870) and output from memory (register 880).

(3) A 64 byte (plus parity) FIFO (First-In, First-Out) stack memory 820.

(4) Two 16-bit byte counters 825 and 827 (labeled A and B), and a 15-bit holding register 829 associated with the B byte counter.

(5) A control unit 885 which controls the operation of the various registers in unit 830 in response to microbits from instruction register 525 (seen in Figure 11).

Each byte of the FIFO stack memory 820 may be loaded into any byte position of the memory data input register 870, or be obtained from any byte position of the memory data output register 880. In addition, the FIFO stack 820 may be loaded from, or place a byte on; the D-bus 830. Data can be transferred between the device and the FIFO stack 820 directly over D-bus 850 under control of the data path logic unit 830.

The A byte counter 825, which can be loaded from the C-bus 150, keeps track of the number of bytes transferred between the FIFO stack 820 and main memory.

The B byte counter 827, which can also be loaded from the C-bus 150, keeps track of the number of bytes transferred between the FIFO stack 820 and the I/O interface 130 via D-bus 850. In addition, the B counter 827 has associated with it a holding register 829, the contents of which can be loaded into the B counter 827 automatically when the byte count in the B counter reaches zero.

Once the starting memory address is locked into the memory address counter 860 and the A and B counters 825 and 827 receive the byte count obtained from the CCW, the data path logic unit 830 begins to transfer data between memory and the device via the FIFO stack 820 and D-bus 850. In an input operation, bytes are read from the bus/tag interface and the B counter 827 is decremented accordingly as data is loaded into the FIFO stack 820. As soon as there are four or more bytes in the FIFO stack 820, the logic initiates a memory request, increments the memory address counter 860, and decrements the A byte counter 825.

Special handling on off-boundary start or on non-modulo-4 block end conditions is implemented by the data path logic in a fashion similar to that used in the multiplexer channel. The FIFO stack 820 is treated like a circular buffer, so that if occasionally the device "gets ahead" of memory, no special procedures are required, unless the stack is full (empty on output) when the next byte from the device arrives (or is required in output). This is very unlikely, but if it occurs, an err

0021489

condition is noted and the I/O operations terminated.

Output operation is essentially identical. Data is read from memory into the FIFO stack 820 whenever required, and from the stack 820 into the device at the device rate. The data path logic unit 830 decrements the byte counters 825 and 827 and increments the address counter 860 appropriately.

The holding register 829 associated with the B counter 827 is used in data chaining. If data chaining is specified for a fast device, there is very little time available between the end of transfer of one data block and the beginning of the next. In some disc storage devices, for example, this time may be as short as 1.2 microseconds. To prepare for this situation, the channel, upon detecting data chaining, prefetches the next CCW and stores it in the scratch pad memory 810 (seen in Figure 11). The new byte count is stored in the holding register 829. When the B counter 827 decrements to zero, the holding register 829 is automatically loaded into the B counter, and the transfer between the device and the FIFO stack 820 can continue without interruption. Because of the buffering effect of the stack 820, the A byte counter 825 decrements to zero asynchronously with the B byte counter 827. In the case of an input to memory operation, the A count will generally reach zero after the B count; in the case of output A will precede B. In either case, there will be enough time to load a new address into the address counter 860 and a new byte count into the A byte counter 825, to sustain the chaining operation.

When the data path addresses memory via the memory address counter 860 (which has 24 bits and holds the address only), it uses the storage protect key in the high order bits of the memory address register 310 in memory interface unit 120.

4.4   I/O Interface.

The I/O interface 130 of the selector channel (shown in Figure 12) is nearly identical to that of the multiplexer channel (shown in Figure 6). However, four additional lines are implemented in the selector channels as noted earlier in Section 3.2.4.

The selector channel operates only in burst mode. The sequence of signals on the bus/tag interface is as follows (assuming an input operation): Initial selection is identical to the multiplexer case, except that the channel keeps SELECT OUT high, so the device cannot drop OPERATIONAL IN, and so the device remains connected and the burst mode is enforced (see Figures 7 and 8). The actual sequence is:

(1) Channel puts device address on BUS OUT and raises ADDRESS OUT, SELECT/HOLD OUT.

(2) The control unit (CU) responds with OPERATIONAL IN.

(3) CU then puts its address on BUS IN and raises ADDRESS IN.

(4) Channel sends COMMAND OUT meaning "proceed."

(5) CU places status byte (all zero if device is ready) on BUS IN, and raises STATUS IN.

(6) Channel responds with SERVICE OUT.

When the device is ready with data, it begins the data transfer by placing a data byte on BUS IN and raising SERVICE IN. The channel takes the data and responds with SERVICE OUT. This SERVICE IN/SERVICE OUT sequence continues throughout the data transfer.

When the channel decrements the byte count to zero, it responds with a COMMAND OUT to the next SERVICE IN request by the CU, and drops SELECT/HOLD OUT. The control unit drops OPERATIONAL IN, puts status on the BUS IN, and raises STATUS IN. The channel responds with SERVICE OUT, which closes the ending sequence.

During data transfer, the selector channel can temporarily stop the data transfer by raising SUPPRESS OUT. The channel can also do this when the control unit attempts to send status to the channel. This is called "status stacking." The control unit keeps track of such deferred status information, and presents it to the channel later.

5.      HARDWARE CONSIDERATIONS.

The functions of the channel which have been described are preferably instrumented with existing super high speed Schootky transistor-transistor-logic large-scale integrated circuit building blocks. Because such circuits are used in a variety of other digital applications, low manufacturing cost is achieved through volume production. By thus reducing component costs, the channel provides a better cost-performance ratio than could be achieved through the use of circuits having an ad hoc design.

In particular, all of the functions needed to carry out the arithmetic logic functions are concentrated in a cascaded group of microprocessor "bit-slice" devices. For example, the arithmetic logic unit 550 shown in Figures 5 and 10 of the drawings may be formed from four type Am 2901 four-bit microprocessor circuits interconnected with a type Am 2902 carry look-ahead circuit marketed by Advanced Microdevices, Inc. of Sunnyvale, California. These commercially available integrated circuits together form a complete 16-bit arithmetic logic unit capable of directly manipulating data on the 16-bit wide C-bus 150, and provides sixteen 16-bit internal registers which are independently addressable by the A-address and B-address fields of the microinstruction register 525 (see Section 3.2.5, supra). Similarly the microsequencer 520 shown in Figures 5 and 10 may be instrumented with a type 9408 microsequencer integrated circuit manufactured by Fairchild Camera and Instrument Corporation of Mountainview, California.

The use of a single internal main bus, the C-bus 150, as the main highway for data, instructions, and control signals within the channel reduces the number of registers required to instrument a given function and is ideally suited for encoded microprogram control. The various registers which communicate with the C-bus 150 preferably employ tri-state outputs and inputs to minimize bus loading.

## 6. CONCLUSION.

It is to be understood that the embodiments of the invention which have been described are merely illustrative of applications of the principles of the present invention. Numerous modifications may be made to the specific multiplexer and selector channels disclosed without departing from the true spirit and scope of the invention.

CLAIMS:

1.      A channel for transferring data between a main
memory and a peripheral data handling unit in accordance
with instructions from a central processor which comprises, in combination,

a central processor interface connected to said
central processor for receiving input/output instructions,
channel addresses and device addresses from said central
processor and for transmitting condition codes and interruption requests to said central processor,

a memory interface connected to said main memory for receiving channel commands from said main memory,
for transferring data to and from said main memory, and
for transmitting channel status information to said memory,

an input/output interface connected to said peripheral data handling unit for transmitting instructions
and device addresses to said peripheral unit, for transferring data to and from said peripheral unit, and for
receiving status information from said peripheral unit,

an internal main channel bus interconnecting
said central processor interface, said main memory interface, and said input/output interface, and

a microprogrammed control unit comprising an
arithmetic logic unit, a microprogram sequencing unit,
and a read-only memory for controlling information transfers between each of said interfaces over said internal
main channel bus.

2.      A channel as set forth in claim 1 wherein said
input/output interface transfers information between said
main channel bus and said peripheral unit in one byte
units, wherein said main memory interface transfers information to and from said main memory in four-byte units,
and wherein said main channel bus has an access-width of two bytes.

3.        A channel as set forth in claim 1 wherein said memory interface comprises, in combination, a memory data register, and a memory address register for storing the location in said main memory of data to be transferred between said main memory and said memory data register, and wherein said channel further includes an internal data storage unit connected between said input/output interface and said memory data register.

4.        In a computing system, a selector channel for transferring data in a block composed of a predetermined number of bytes between a high-speed peripheral data handling device and a random-access main memory, said channel comprising, in combination,

a memory address counter,

means for storing the beginning main memory address of said block in said memory address counter,

a first-in, first-out local storage stack memory connected between said main memory and said peripheral device,

a first byte counter for storing a count indicative of the number of bytes in said block remaining to be transferred between said stack memory and said main memory,

a second byte counter for storing a count indicative of the number of bytes in said block remaining to be transferred between said stack memory and said peripheral device,

means for loading said predetermined number into both said first and said second byte counters prior to the transfer of said block,

means for incrementing said memory address register each time data is transferred between said channel and said main memory,

means for decrementing said first byte counter each time data is transferred between said stack memory and said main memory,

means for decrementing said second byte counter each time data is transferred between said stack memory and said peripheral device,

means responsive to a zero count in said first byte counter for terminating the further transfer of data between said stack memory and said main memory, and

means responsive to a zero count in said second byte counter for terminating the further transfer of data between said stack memory and said peripheral device.

5.        A selector channel as set forth in claim 4 including a holding register connected to said second byte counter for storing a count indicative of the number of bytes of data in a second block to be transferred and means for loading the contents of said holding register into said second byte counter whenever the contents of said second byte counter is decremented to zero.

6.        A byte multiplexer channel for transferring data, one byte at a time, between a random-access main memory and a plurality of peripheral data-handling devices, each of said devices having a unique device address associated therewith, said channel comprising, in combination,

a random access local storage memory and a local storage address register for storing unit control information associated with each of said plurality of devices, said unit control information comprising the address in main memory of data to be transferred between main memory and the associated device, a byte count indicating the number of bytes of data to be transferred, an an n-byte buffer area,

means for accepting a device address from an operational device requiring service from said channel and for loading said device address in said local storage address register to specify the unit control information associated with said channel,

means for thereafter transferring one byte of data between said operational device and the buffer-area in said local storage memory associated therewith, and

means for transferring n-bytes of data between said buffer area and control information associated with

said operational device.

7.      A multiplexer channel as set forth in claim 6
further comprising means for initiating a data transfer
sequence between said main memory and a selected one of
said devices, said means for initiating comprising means
for fetching channel command information from said main
memory in response to the receipt of an input/output instruction from a central processing unit connected to
said channel, said input/output instruction including the
address of said selected device, and means for storing at
least a portion of said channel command information in
said local storage memory at a location specified by the
address of said selected device to create the initial
unit control information associated with said selected
device.

FIG.1

FIG.2

FIG.3

FIG.4

FIG.5

FIG.6

5-X-PHA 1043

FIG.7

FIG.8

0021489

1. REQ-IN

2. HLD-OUT

3. SEL-OUT

4. OP-IN

5. ADD-IN

6. COMM-OUT

7. SERV-IN

8. SERV-OUT

BUS-IN RD.    UNIT-ADD.        DAT.BY

# FIG. 9

FIG.10

8-X- PHA 1043

FIG.11

FIG.12

0021489

# EUROPEAN SEARCH REPORT

**European Patent Office**

Application number

EP 80 20 0522

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| | GB - A - 1 264 096 (IBM) <br><br> * Page 1, lines 12-13, 64-78; page 2, lines 19-52, 129-130; page 3, lines 1-13, 61-87, 105-129; page 4, lines 29-34, 47-56, 106-109, 120-122; page 6, lines 37-43, 51-82; page 7, lines 72-84; page 8, lines 101-114; figures 1,2,3 * <br><br> -- | 1,4,5, 6 | G 06 F 3/04 |
| | US - A - 3 432 813 (IBM) <br><br> * Column 3, lines 16-26, 53-75; column 4, lines 32-46; column 5, lines 63-74; column 6,lines 9-27;column 7,lines 37-40,55-70 column 8, lines 1-57; column 9, lines 12-17; column 10, lines 12-16; figures 1,6,7,11 * <br><br> -- | 1,4, 6,7 | TECHNICAL FIELDS SEARCHED (Int.Cl. ³) <br><br> G 06 F 13/00 |
| | US - A - 4 093 981 (BURROUGHS) <br><br> * Column 2, lines 1-13; column 3, lines 45-49, 60-66; column 4, lines 1-35, 49-65; column 5, lines 8-44; column 11, lines 16-36; figures 1,2 * <br><br> -- | 1,3,4, 6,7 | |
| | COMPUTER DESIGN, vol. 17, no. 10, October 1978. Concord US CHU: "LSI Bipolar FIFO Memory Increases Peripheral Controller Speed",pages 136,141,144,149,150. <br><br> * Page 136, third column, lines 3-18; page 141, first column and second column, lines 1-6, figure 1 * <br><br> ---- | 1,4 | CATEGORY OF CITED DOCUMENTS <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons <br><br> &: member of the same patent family, corresponding document |

The present search report has been drawn up for all claims

| Place of search | Date of completion of the search | Examiner |
|---|---|---|
| The Hague | 02-09-1980 | DHEERE |

EPO Form 1503.1 06.78